# EUROPEAN PATENT APPLICATION

(11) **EP 2 323 099 A1**
(43) Date of publication of application: **18.05.2011**
(21) Application number: 10188254.6
(22) Date of filing: 20.10.2010
(51) Int. Cl.: G06T 1/60

(54) **Image reading device and method of writing image data in an image reading device**

(30) Priority: 23.10.2009 JP 2009244720
(71) Applicant: Seiko Epson Corporation, Tokyo 163-0811 (JP)
(72) Inventor: Okamoto, Tadayuki, Nagano 392-8502 (JP)
(74) Representative: MERH-IP Matias Erny Reichl Hoffmann

(57) **Abstract**

Technology improves the data transfer rate of memory disposed in an image reading device 11. An image reading device 11 includes an image reading sensor 33 (34) that captures an image of a subject, memory 500 that has a storage area divided into a plurality of memory banks 510 to 580, each of the plural memory banks having an image data storage area for storing image data D1 (D2) of the captured image, and a memory control unit (57) that writes the image data to the image data storage area while changing the memory bank accessed for writing the image data so that the image data is stored in the memory banks segmented into data units that are smaller than the data capacity of the image data storage area.

## Description

### BACKGROUND

### 1. Technical Field

The present invention relates to an image reading device and to a method of writing image data in an image reading device.

### 2. Related Art

Technology for image processing (such as correcting shading or gamma correction) the image data of an image scanned by a scanner, and then outputting the corrected image data to an external device such as a personal computer connected to the scanner, is known from the literature. Such scanners typically have memory (such as SDRAM (Synchronous Dynamic Random Access Memory)) for storing the image data before an image data correction process is applied, and correction data used for the image data correction process. Japanese Unexamined Patent Appl. Pub. JP-A-2008-192262, for example, teaches technology related to SDRAM control.

A scanner according to the related art with SDRAM continuously writes the captured image data to the same memory bank of SDRAM, and reads image data from the same memory bank as the written memory bank. If an area specified by a different row address in the same memory bank is accessed on a time-share basis, a precharge is required with each memory access and the memory data transfer rate drops.

This problem is not limited to scanners with SDRAM, and is generally common to all types of image reading devices having memory with a plurality of memory banks.

### SUMMARY

The present invention relates to technology that improves the data transfer rate of memory disposed in an image reading device.

Embodiments and applications of the invention that solve at least part of the foregoing problem are described below.

A first aspect of the invention is an image reading device including an image reading sensor that captures an image of a subject; memory that has a storage area divided into a plurality of memory banks, each of the plural memory banks having an image data storage area for storing image data of the captured image; and a memory control unit that writes the image data to the image data storage area while changing the memory bank accessed for writing the image data so that the image data is stored in the memory banks segmented into data units that are smaller than the data capacity of the image data storage area.
In other words, an image reading device according to the first aspect comprises an image reading sensor for capturing an image of a subject; memory that has a storage area divided into a plurality of memory banks, each of the plural memory banks having an image data storage area for storing image data of the captured image; and a memory control unit for writing the image data to the image data storage areas of the plurality of memory banks, wherein the memory control unit is configured to change the memory bank that is accessed for writing the image data during writing the image data, wherein the image data is sequentially stored in the memory banks by being segmented into data units, each data unit of the image data having a smaller data size than the data capacity of the image data storage area of one of the memory banks and each data unit being stored in one of the memory banks.

With an image reading device according to this aspect of the invention, image data can be read from a memory bank that is different from the memory bank to which image data is being written. If data is read from a memory bank that is different from the memory bank to which data is being written, the need for precharges can be suppressed and the transfer rate of the memory disposed in the image reading device can be improved. Furthermore, even if the memory bank selected for image data reading and the memory bank used for image data writing are the same, writing image data to and reading image data from the same memory bank for an extended time can be suppressed because the memory bank accessed for writing image data changes.

In an image reading device according to another aspect of the invention, the memory control unit preferably reads the image data from a memory bank that is different from the memory bank to which the image data is being written. In other words, the memory control unit may be adapted to read the image data from a memory bank that is different from the memory bank to which the image data is being written by reading a first data unit of the image data from a first memory bank while writing a second data unit of the image data from a second memory bank.

Because the image reading device according to this aspect of the invention reads image data from a memory bank that is different from the memory bank accessed to write image data, precharges can be suppressed. As a result, the data access rate of the memory disposed in the image reading device can be improved.

In an image reading device according to another aspect of the invention, the memory control unit preferably changes the memory bank accessed for writing when writing a specific amount of data that is less than the data capacity of the image data storage area is completed. In other words, the memory control unit may be adapted to change the memory bank that is accessed for writing when writing a specific amount of data that is less than the data capacity of the image data storage area of one of the memory banks is completed. Preferably, the specific amount of data corresponds to the data size of the data units.

The image reading device according to this aspect of the invention can preferably store image data to each memory bank in a regular order. In other words, the memory control unit may be adapted to change the memory bank that is accessed for writing according to a regular order among the plurality of memory banks.

In an image reading device according to another aspect of the invention, the memory control unit preferably changes the memory bank accessed for writing according to a predetermined order. In other words, the memory control unit may be adapted to change the memory bank that is accessed for writing according to a predetermined order among the plurality of memory banks.

The image reading device according to this aspect of the invention can store image data to each memory bank in a predetermined order.

Another aspect of the invention is a method of writing image data in an image reading device, the image reading device having memory with a storage area divided into a plurality of memory banks, and each of the plural memory banks having an image data storage area for storing the image data, the image data writing method including steps of: (a) capturing an image of a subject; and (b) writing image data to the memory while changing the memory bank accessed for writing the image data so that the image data of the captured image is segmented into data units that are smaller than the data capacity of the image data storage area and sequentially stored in the memory banks. In other words, a method of writing image data in an image reading device can be provided, wherein the image reading device has memory with a storage area divided into a plurality of memory banks, and each of the plural memory banks has an image data storage area for storing the image data, the image data writing method comprising steps of (a) capturing an image of a subject; and (b) writing image data to the memory); wherein the memory bank that is accessed for writing the image data during the step (b) of writing the image data is changed, the image data being sequentially stored in the memory banks by being segmented into data units, each data unit of the image data having a smaller data size than the data capacity of the image data storage area of one of the memory banks and each data unit being stored in one of the memory banks.

The invention can also be rendered in many other ways. For example, the invention can be rendered as a method and a device for writing image data, as an image data writing system, as an integrated circuit device that renders the function of these methods or devices, as a computer program, and as a recording medium that records the computer program.
Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a block diagram showing the configuration of an image reading and printing system including a hybrid device 11 according to a preferred embodiment of the invention and a personal computer 12.
FIG. 2 is an oblique view of the hybrid device 11.
FIG. 3 is a section view showing main parts of the hybrid device 11 and particularly the cut paper transportation path 22.
FIG. 4 is a block diagram showing the main parts of the hybrid device 11.
FIG. 5 describes the internal configuration of the memory 500.
FIG. 6 describes the process of writing image data to the first memory bank 510 and fifth memory bank 550.
FIG. 7 describes the process of writing image data to the second memory bank 520 and sixth memory bank 560.
FIG. 8 describes the process of writing image data to the third memory bank 530 and seventh memory bank 570.
FIG. 9 describes the process of writing image data to the fourth memory bank 540 and eighth memory bank 580.
FIG. 10 describes the process of writing image data to the first memory bank 510 and fifth memory bank 550.
FIG. 11 describes the process of writing image data to the second memory bank 520 and sixth memory bank 560 while image data is read from the first memory bank 510 and correction data is read from the fifth memory bank 550.
FIG. 12 describes the process of writing image data to the third memory bank 530 and seventh memory bank 570 while image data is read from the second memory bank 520 and correction data is read from the sixth memory bank 560.
FIG. 13 is a flow chart of the process that selects the memory bank from which correction data is read.

### DESCRIPTION OF EMBODIMENTS

### A. Embodiments

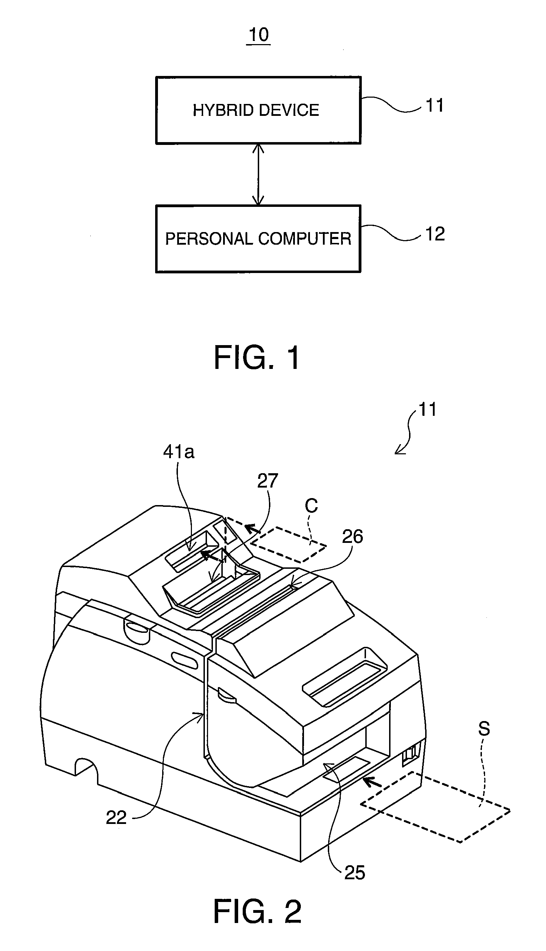

FIG. 1 is a block diagram of the configuration of an image reading and printing system according to a first embodiment of the invention.
The image reading and printing system 10 includes a hybrid scanner/printer device 11 as an image reading device (referred to below as simply a hybrid device 11), and a personal computer 12 that is connected to the hybrid device 11.
The hybrid device 11 can generate personal verification data for a check by reading both a check and an identity card or license, for example, that verifies the identity of the person presenting a check, and can print on the check. The personal computer 12 controls operation and data processing.

FIG. 2 is an oblique view showing the outside of the hybrid device 11. The hybrid device 11 has a cut sheet insertion opening 25 from which checks or other cut sheets S are inserted, a cut sheet transportation path 22 that conveys the inserted cut sheet S, and a cut sheet exit 26 from which the conveyed cut sheet S is discharged. The hybrid device 11 also has a roll paper exit 27 from which roll paper (not shown in the figure) stored internally can be discharged, and a card insertion opening 41a from which a card C used as an identity card can be inserted. The hybrid device 11 also has an internal print mechanism for printing on roll paper.

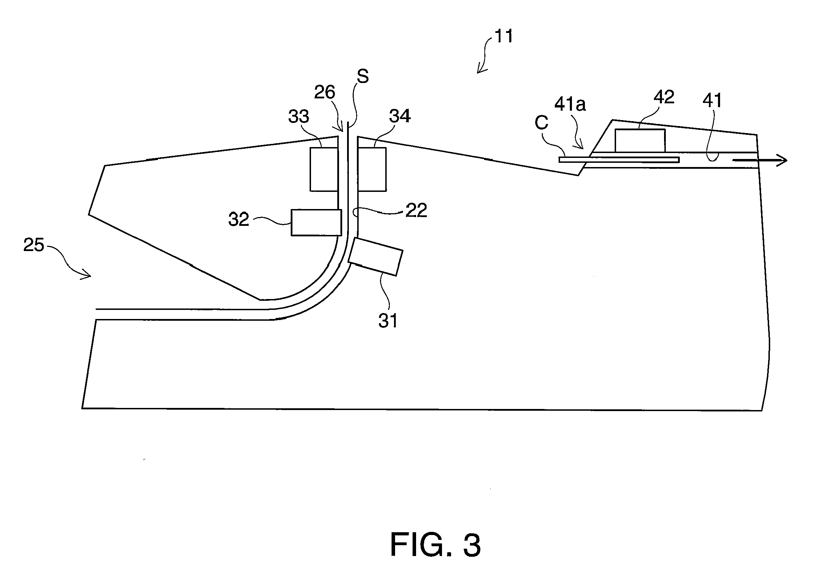

FIG. 3 is a section view showing the mains parts of the hybrid device 11 and particularly the cut sheet transportation path 22. A back-side printing unit 31 for printing on the back of a cut sheet S, and a front-side printing unit 32 for printing on the front of a cut sheet S, are disposed inside the cut sheet transportation path 22. The hybrid device 11 can thus print on both sides of a cut sheet S inserted from the cut sheet insertion opening 25 by means of the back-side printing unit 31 and front-side printing unit 32.

A first image reading sensor 33 for scanning images on the front of a cut sheet S, and a second image reading sensor 34 for scanning images on the back of a cut sheet S, are disposed near the cut sheet exit 26 of the cut sheet transportation path 22. In this embodiment of the invention the first image reading sensor 33 and second image reading sensor 34 are rendered using contact image sensor (CIS) type image scanners.

A card C inserted from the card insertion opening 41a can be conveyed through the card transportation path 41 by a card transportation mechanism (not shown in the figure) rendered using a plurality of rollers. A card image reading sensor 42 for scanning the front of a card C is disposed to the card transportation path 41. Like the first image reading sensor 33 and second image reading sensor 34, the card image reading sensor 42 in this embodiment of the invention is rendered using a CIS image scanner.

The hybrid device 11 can thus scan and capture images of the front and back sides of a check inserted as a cut sheet S using the first image reading sensor 33 and second image reading sensor 34, and can read a license, identity card, or other type of card C presented by the check user using the card image reading sensor 42. The hybrid device 11 can thus easily generate check user verification data by reading a check and reading an identify card or license, for example, to verify the identity of the check user.

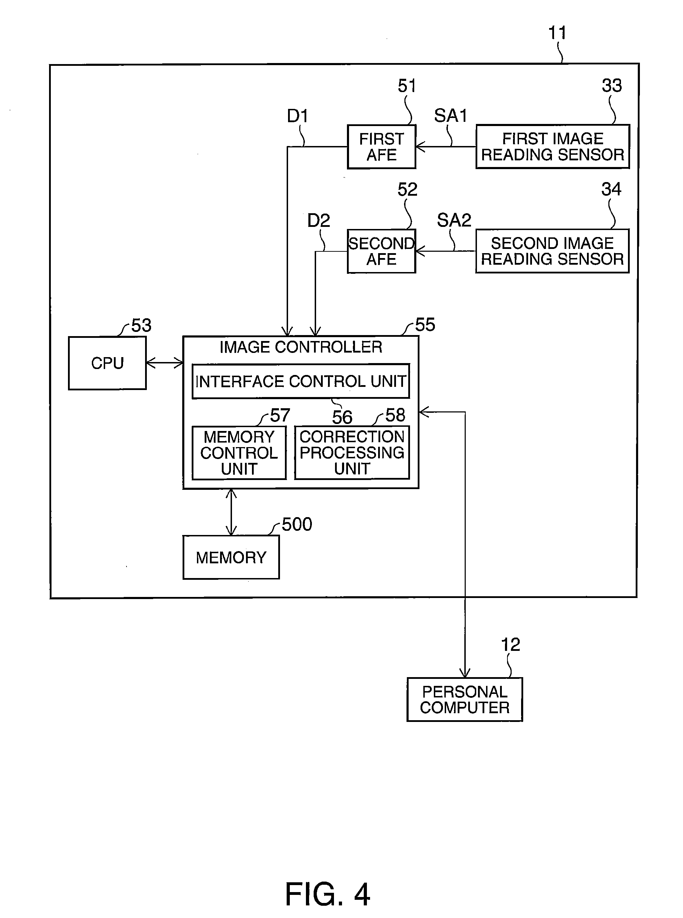

FIG. 4 is a block diagram showing the configuration of the mains parts of the hybrid device 11. The hybrid device 11 has the first and second image reading sensors 33 and 34 described above, first and second analog front ends (AFE) 51 and 52, a CPU 53, memory 500, and an image controller 55 rendered by a FPGA (Field Programmable Gate Array).

The first AFE 51 analog/digital (A/D) converts an input first analog read signal SA1 output from the first image reading sensor 33, and outputs the result as front image data D1. The second AFE 52 A/D converts an input second analog read signal SA2 output from the second image reading sensor 34, and outputs the result as back image data D2.

The CPU 53 controls overall operation of the hybrid device 11. As described below, the memory 500 is SDRAM configured with eight memory banks, and stores the front image data D1, back image data D2, and correction data (described below).
The image controller 55 includes an interface control unit 56 that controls interface operations between other devices, a memory control unit 57 that controls writing the image data D1 and D2 to memory 500 and reading from memory 500, and a correction processing unit 58 that controls correcting the image data D1 and D2 read from the memory 500.

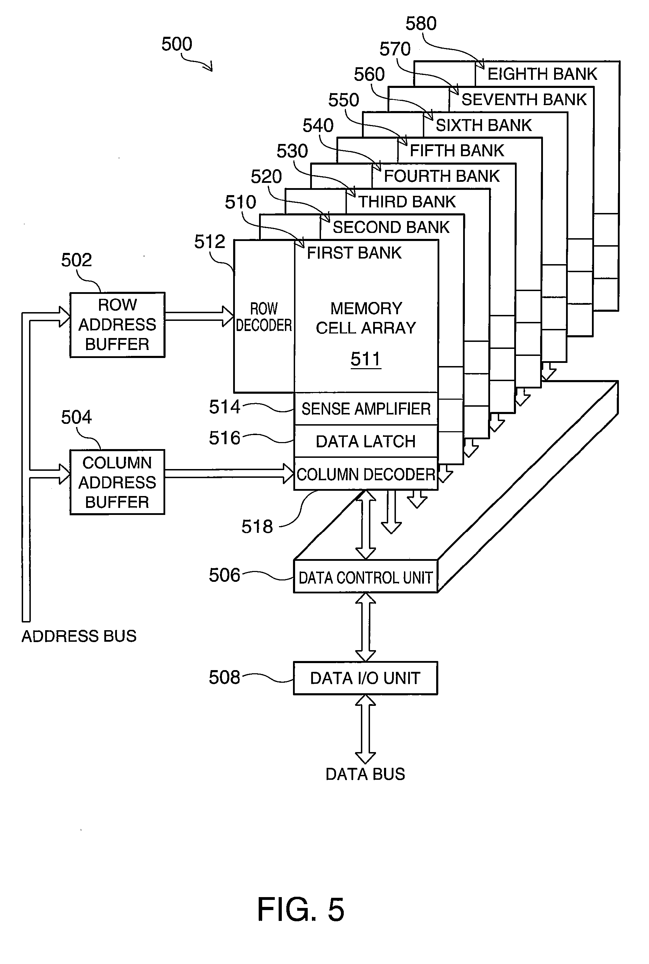

FIG. 5 describes the internal configuration of the memory 500. The memory 500 includes eight memory banks 510, 520, 530, 540, 550, 560, 570, 580, a row address buffer 502, a column address buffer 504, a data control unit 506, and a data l/0 unit 508.
The first memory bank 510 includes a memory cell array 511, row decoder 512, sense amplifier 514, data latch 516, and column decoder 518. The second memory bank 520 to eighth memory bank 580 likewise include a memory cell array, row decoder, sense amplifier, data latch, and column decoder.

Of the addresses supplied from the address bus, the high 3 bits are used as a memory bank address, and the remaining 30 bits are used as a cell address for specifying a particular memory cell in the memory cell array. The row address composed of the high bit of the cell address is stored in the row address buffer 502. The column address composed of the low bit of the cell address is stored in the column address buffer 504. The row address stored in the row address buffer 502 is supplied to a row decoder disposed in each memory bank. The column address stored in the column address buffer 504 is supplied to a column decoder disposed in each memory bank.

Data stored in the area (row) specified by the row address is amplified by the sense amplifier 514 and supplied to the data latch 516. The data control unit 506 inputs and outputs data to the column decoder disposed in the memory bank selected by the memory bank address. Data is communicated between the selected memory bank and the image controller 55 (FIG. 4) through a data bus connected to the data l/0 unit 508.

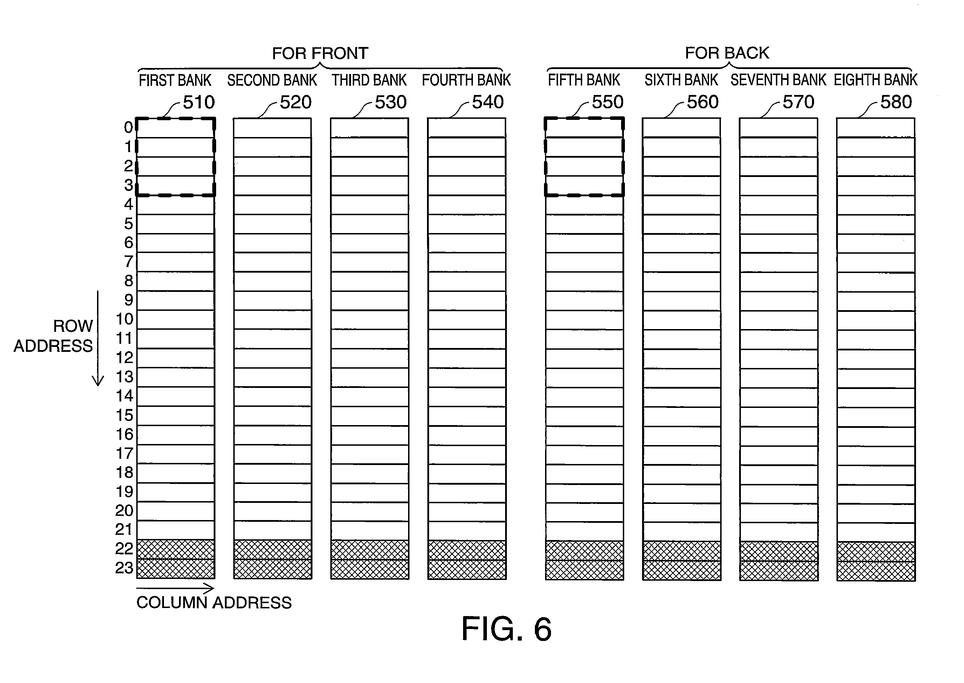

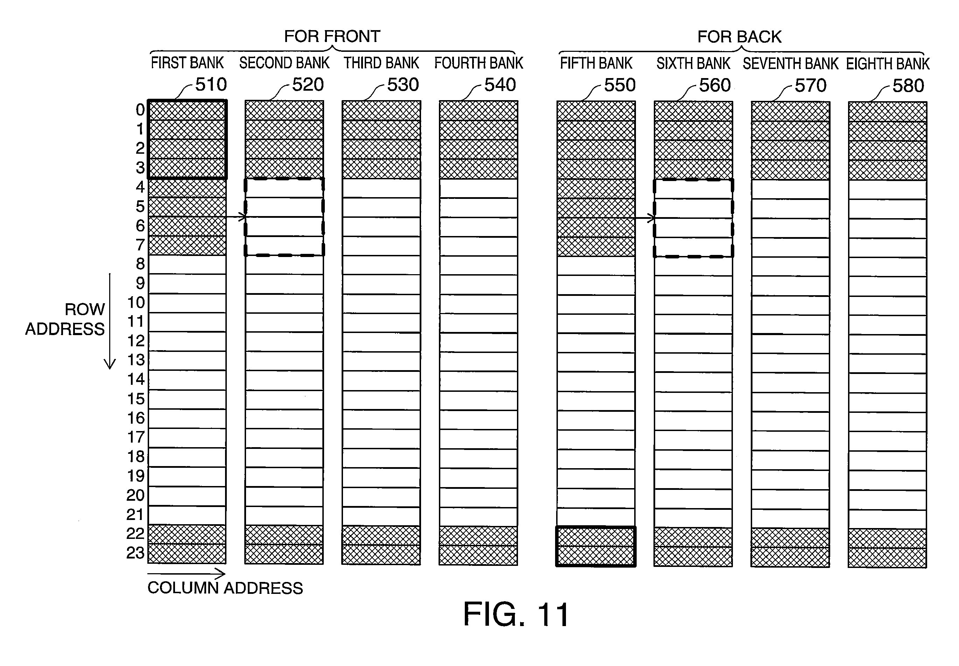

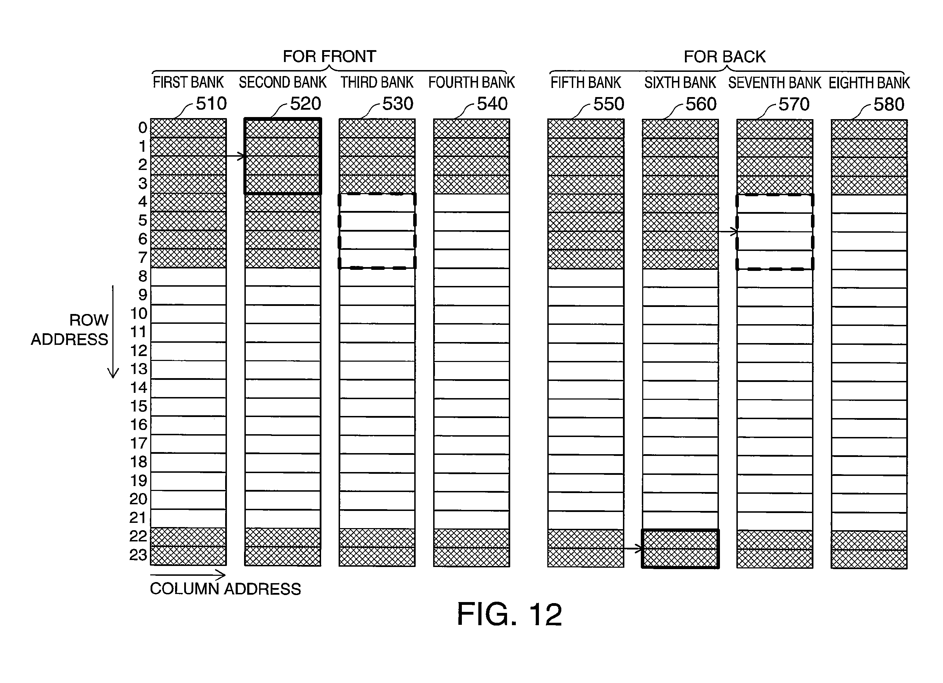

FIG. 6 to FIG. 12 describe the processes of writing and reading image data in the eight memory banks over time. Note that the cells surrounded by a bold dotted line in FIG. 6 to FIG. 12 denote write cells, and cells denoted by a solid bold line in FIG. 11 and FIG. 12 denote read cells. Furthermore, while actual memory devices have storage areas denoted by many more row addresses, only storage cells denoted by row addresses #0 to #23 are shown in this embodiment for brevity. Cells with crosshatching denote cells where data is stored.

In this embodiment of the invention the memory control unit 57 of the image controller 55 uses the first memory bank 510, second memory bank 520, third memory bank 530, and fourth memory bank 540 for storing front image data D1, and uses the fifth memory bank 550, sixth memory bank 560, seventh memory bank 570, and eighth memory bank 580 for storing back image data D2. In addition, the image data storage cells used for storing image data in each memory bank are the cells addressed by row addresses #0 to #21.

Correction data (white reference data and black reference data) used for shading the image data D1 and D2 is previously stored in the cells addressed by row addresses #22 and #23. Shading correction is correction that is applied to remove variations in the sensitivity of individual imaging elements and variations in the amount of light from the light sources used by the image reading sensors 33 and 34.
The white reference data is acquired by each imaging element reading a standard white reference when the light source is on, and the black reference data is acquired by each imaging element reading a standard black reference when the light source is off. This correction data includes first correction data that is used to correct the shading of the front image data D1 captured by the first image reading sensor 33, and second correction data that is used to correct the shading of the back image data D2 captured by the second image reading sensor 34. Correction values for each imaging element are contained in the first correction data and second correction data. Each of the eight memory banks store the same first correction data and second correction data in this embodiment of the invention.

As shown in FIG. 6, the memory control unit 57 of the image controller 55 sequentially writes the front image data D1 from the area specified by row address #0 to the area addressed by row address #3 in the first memory bank 510, and sequentially writes the back image data D2 from the area addressed by row address #0 to the area addressed by row address #3 in the fifth memory bank 550. The front image data D1 and back image data D2 are written on a time shared access basis. Note that all of the following operations reading and writing memory 500 are executed by means of time shared access.

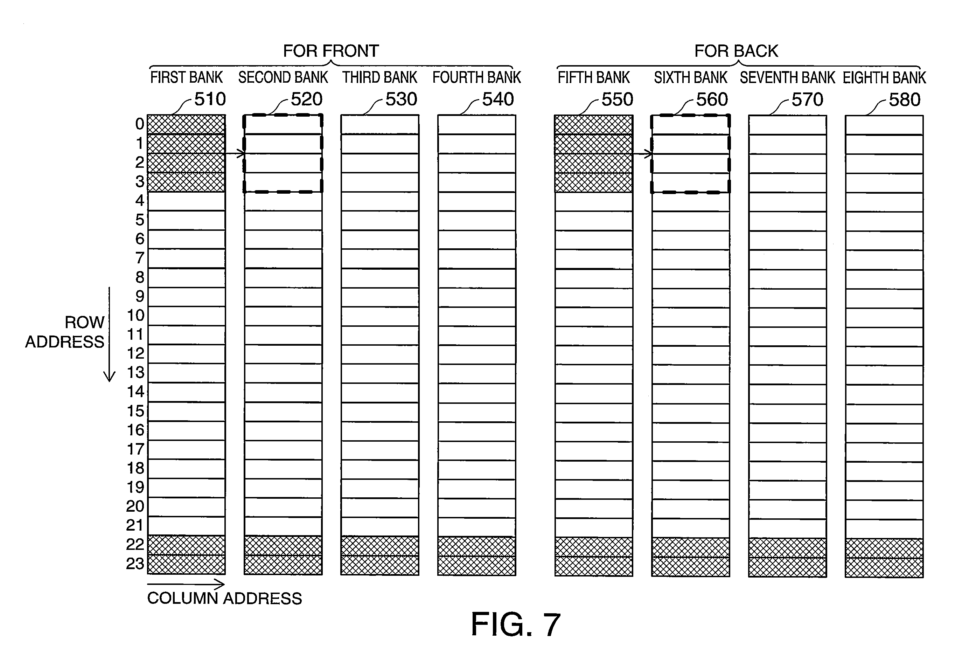

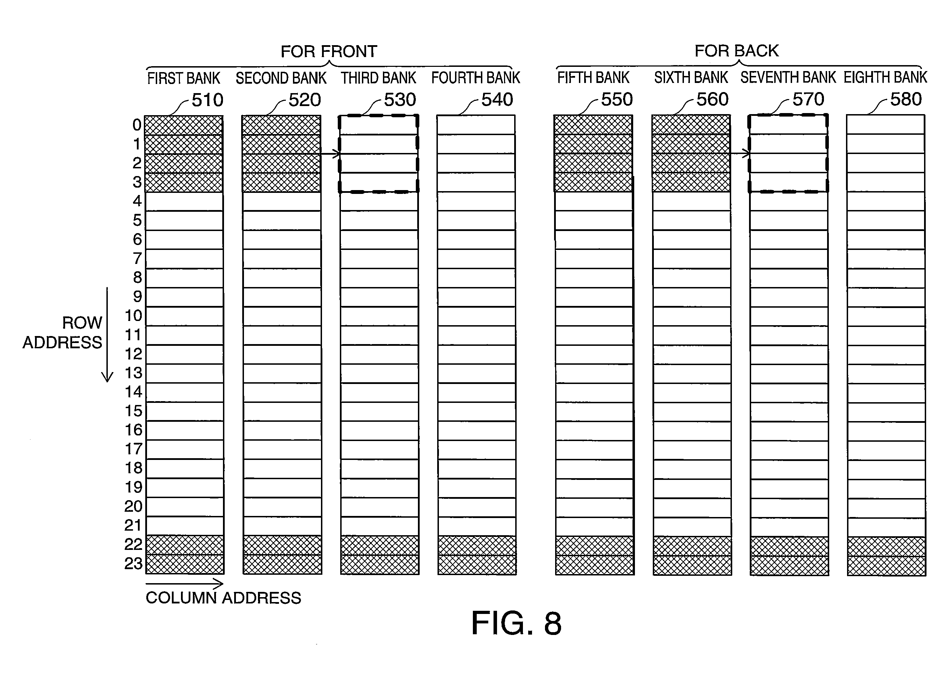

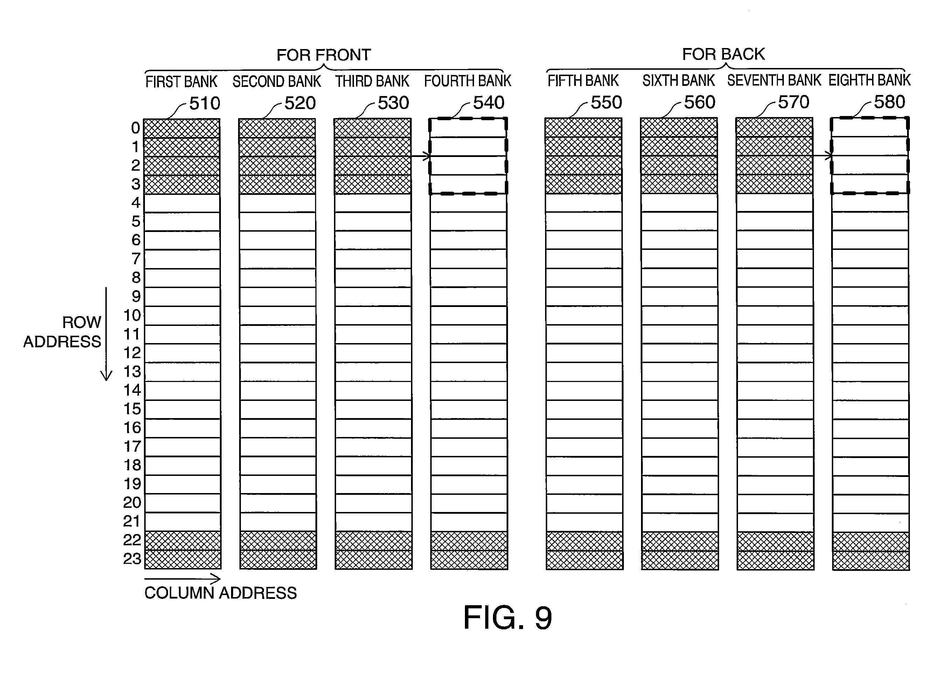

As shown in FIG. 7, when writing the front image data D1 to the cell addressed by row address #3 in first memory bank 510 is completed, the memory control unit 57 changes the front image data D1 write destination to the second memory bank 520. When writing the back image data D2 to the cell addressed by row address #3 in the fifth memory bank 550 is completed, the memory control unit 57 changes the back image data D2 write destination to the sixth memory bank 560.
Likewise, as shown in FIG. 8 and FIG. 9, each time writing to the areas specified by the four row addresses is completed, the memory control unit 57 sequentially switches the memory bank that is written to to the next memory memory bank. More specifically, the memory control unit 57 changes the memory bank to which image data is written so that the image data is stored in each memory bank segmented into data blocks that are smaller than the total storage capacity of the image data storage area of each memory bank.

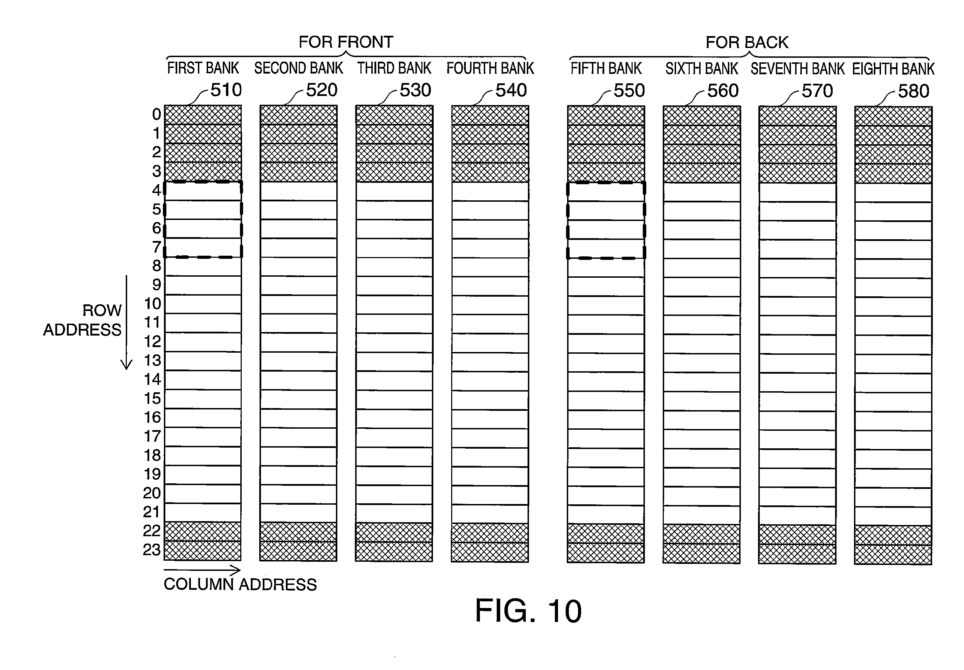

As shown in FIG. 10, when writing the front image data D1 to the area specified by row address #3 in the fourth memory bank 540 is completed, the memory control unit 57 changes the front image data D1 write address back to the first memory bank 510. When writing the back image data D2 to the area specified by row address #3 in the eighth memory bank 580 is completed, the memory control unit 57 similarly changes the back image data D2 write address back to the fifth memory bank 550.

As shown in FIG. 11, when writing the front image data D1 to the cell addressed by row address #7 in first memory bank 510 is completed, the memory control unit 57 changes the front image data D1 write destination to the second memory bank 520. When writing the back image data D2 to the cell addressed by row address #7 in the fifth memory bank 550 is completed, the memory control unit 57 changes the back image data D2 write destination to the sixth memory bank 560.

When the write address of the front image data D1 changes to the second memory bank 520 and the write address of the back image data D2 changes to the sixth memory bank 560, the memory control unit 57 sequentially reads the front image data D1 stored from the area specified by row address #0 to the area specified by row address #3 in the first memory bank 510. The memory control unit 57 also sequentially reads the first correction data (white reference data and black reference data) stored from the area specified by row address #22 to the area specified by row address #23 in the fifth memory bank 550. The correction processing unit 58 of the image controller 55 applies shading correction using the read first correction data to the read front image data D1, and sends the corrected front image data D1 to the personal computer 12.

As described above, each of the eight memory memory banks stores the same first correction data and second correction data in this embodiment of the invention. The memory control unit 57 can therefore read the first correction data and second correction data regardless of which of the eight memory banks is selected. More specifically, the memory control unit 57 can read the first correction data for correcting the shading of the front image data D1 from the seventh memory bank 570, for example, and can read the second correction data for correcting the shading of the back image data D2 from the first memory bank 510. In this embodiment of the invention the memory control unit 57 selects the memory bank from which the correction data is to be read according to specific rules from among the memory banks to which the image data D1 and D2 is not written and image data is not read. The method of selecting the memory bank from which this correction data is read is described below.

As shown in FIG. 12, when writing the front image data D1 to the area specified by row address #7 in the second memory bank 520 is completed, the memory control unit 57 starts writing the front image data D1 to the third memory bank 530. Likewise, when writing the back image data D2 to the area addressed by row address #7 in the sixth memory bank 560 is completed, the memory control unit 57 starts writing the back image data D2 to the seventh memory bank 570.

The memory control unit 57 sequentially reads the front image data D1 stored in the second memory bank 520 from the area specified by row address #0 to the area specified by row address #3 when the following two conditions are satisfied.
(1) Reading the front image data D1 stored from the area specified by row address #0 to the area specified by row address #3 in the first memory bank 510 is completed.
(2) The write destination of the front image data D1 has changed from the second memory bank 520 to the third memory bank 530.
   Furthermore, when the following condition is satisfied, the memory control unit 57 sequentially reads first correction data stored from the area specified by row address #22 to the area specified by row address #23.
(3) The write destination of the back image data D2 has changed from the sixth memory bank 560 to the seventh memory bank 570.

The correction processing unit 58 applies a shading correction process to the read front image data D1 using the read first correction data, and sends the corrected front image data D1 to the personal computer 12. Here and below, the memory control unit 57 writes the front image data D1 and back image data D2, and reads the front image data D1 and correction data, by time shared memory access. Note that in this embodiment of the invention reading the back image data D2 and second correction data occur after reading the front image data D1 is completed through an area specified by a particular row address.

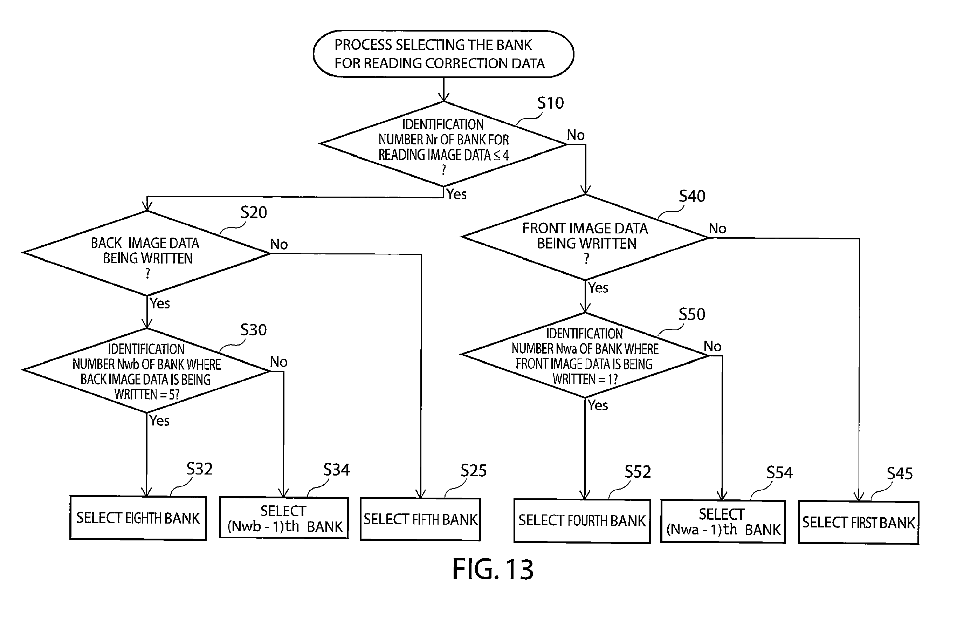

FIG. 13 is a flow chart of the process that selects the memory bank from which to read the correction data.
In step S10, the memory control unit 57 determines if the identification number Nr of the memory bank from which image data is read is 4 or less. The memory bank identification number is a number assigned to each memory bank, and in this embodiment of the invention the identification number of the first memory bank 510 is 1, and the identification number of the fifth memory bank 550 is 5. More specifically, the memory control unit 57 determines in step S10 if front image data D1 stored in any of the first memory bank 510 to the fourth memory bank 540 is being read, or if the back image data D2 stored in any of the fifth memory bank 550 to eighth memory bank 580 is being read.

If in step S10 the memory control unit 57 determines that the identification number Nr of the memory bank from which image data is read is 4 or less (step S10 returns Yes), that is, that front image data D1 is being read, the memory control unit 57 determines in step S20 if back image data D2 is being written.

If in step S20 the memory control unit 57 determines the back image data D2 is not being written (step S20 returns No), in step S25 the memory control unit 57 selects the fifth memory bank 550 for reading the first correction data.
If in step S20 the memory control unit 57 determines the back image data D2 is being written (step S20 returns Yes), the memory control unit 57 determines in step S30 if the identification number Nwb of the memory bank for writing the back image data D2 is 5.

If in step S30 the memory control unit 57 determines the identification number Nwb of the memory bank to which the back image data D2 is being written is 5 (step S30 returns Yes), in step S32 the memory control unit 57 selects the eighth memory bank 580 for reading the first correction data.
If in step S30 the memory control unit 57 determines the identification number Nwb of the memory bank for writing the back image data D2 is not 5 (step S30 returns No), in step S34 the memory control unit 57 selects memory bank (Nwb-1) for reading the first correction data. That is, the memory control unit 57 selects the memory bank with an identification number 1 less than the identification number of the memory bank to which the back image data D2 is being written.

If in step S10 the memory control unit 57 determines that the identification number Nr of the memory bank from which image data is read is not 4 or less (step S10 returns No), that is, that back image data D2 is being read, the memory control unit 57 determines in step S40 if front image data D1 is being written.

If in step S40 the memory control unit 57 determines the front image data D1 is not being written (step S40 returns No), in step S45 the memory control unit 57 selects the first memory bank 510 for reading the second correction data.
If in step S40 the memory control unit 57 determines the front image data D1 is being written (step S40 returns Yes), the memory control unit 57 determines in step S50 if the identification number Nwa of the memory bank for writing the front image data D1 is 1.

If in step S50 the memory control unit 57 determines the identification number Nwa of the memory bank for writing the front image data D1 is 1 (step S50 returns Yes), in step S52 the memory control unit 57 selects the fourth memory bank 540 for reading the second correction data.
If in step S50 the memory control unit 57 determines the identification number Nwa of the memory bank for writing the front image data D1 is not 1 (step S50 returns No), in step S54 the memory control unit 57 selects memory bank (Nwa-1) for reading the second correction data. That is, the memory control unit 57 selects the memory bank with an identification number 1 less than the identification number of the memory bank to which the front image data D1 is being written.

If the memory bank from which the correction data is read is selected according to such a rule, writing the image data D1 and D2, reading the front image data D1, and reading the first correction data can be done by accessing different memory banks. Likewise, writing image data D1 and D2, reading the back image data D2, and reading the second correction data can be done by accessing different memory banks. Note that in this embodiment of the invention as described above, the back image data D2 and second correction data are read after reading the front image data D1 is completed to an area specified by a particular row address.

As described above, the memory bank to which image data is written changes sequentially, and image data is read from a memory bank different from the memory bank used for writing. In addition, the correction data is read in this embodiment of the invention from a memory bank that is different from the memory bank to which image data is written and the memory bank from which image data is read.

This embodiment of the invention can therefore suppress the occurrence of time shared access (write processes and read processes) of areas specified by different row addresses in the same memory bank. Because time shared access to areas specified by different row addresses in the same memory bank can be suppressed, precharges can be suppressed, and the data transfer rate of the memory 500 can be improved.

Furthermore, because the data transfer rate of the memory 500 can be kept uniform, the capacity of the memory 500 used to temporarily store image data can be reduced. In addition, because reading and writing image data and reading the correction data occur according to a predetermined procedure with this embodiment of the invention, the memory control unit 57 does not need to execute a complicated control process to manage the addresses accessed in memory 500, and faster processing is thereby enabled.

### B. Variations

It will be obvious to one with ordinary skill in the related art that the invention is not limited to the foregoing embodiment and can be varied in many ways without departing from the scope of the accompanying claims. Some examples of such variations are described below.

### B1: Variation 1

The invention is applied to a hybrid device combining a scanner and a printer in the embodiment described above, but the invention can obviously also be applied in a scanner that does not have a printer function, a hybrid device that also has a fax function, and other types of devices that can read, scan, or capture images in other ways.

### B2: Variation 2

SDRAM is used as the memory 500 in the embodiment described above, but the invention can obviously also be applied to image capture devices having a plurality of memory memory banks, including DDR2SDRAM (Double-Data-Rate2 Synchronous Dynamic Random Access Memory) and DDR3SDRAM (Double-Data-Rate3 Synchronous Dynamic Random Access Memory).

### B3: Variation 3

The hybrid device 11 in the foregoing embodiment has two image reading sensors 33 and 34, but the invention can obviously also be applied to hybrid devices having only one image reading sensor and to hybrid devices having three or more image reading sensors. Furthermore, a CIS type image reading sensor is used as the image reading sensor in the embodiment described above, but CCD (charge-coupled device) type image reading sensors may be used instead.

### B4: Variation 4

The memory control unit 57 reads the back image data D2 after reading the front image data D1 is completed through an area specified by a particular row address in the embodiment described above, but the memory control unit 57 could read the back image data D2 while reading the front image data D1. Precharges can be suppressed and the data transfer rate of the memory 500 can be increased in this configuration if different memory banks are used for writing and reading the image data D1 and D2 and reading the correction data.

### B5: Variation 5

Image data is always read from a different memory bank than the memory bank used for writing in the embodiment described above, but the image data could be read from a desirable area specified by the CPU 53. As a result, even if image data is written and image data is read using the same memory bank, the image data will not written to and read from the same memory bank for a long time because the memory bank to which the image data is written changes sequentially in this configuration. Time shared access (writing process and read process) to areas specified by different row addresses in the same memory bank can therefore be suppressed, and the memory 500 transfer rate can be improved.

### B6: Variation 6

The memory bank accessed for writing changes sequentially to the next memory bank each time writing is completed to an area specified by four row addresses in the embodiment described above, but the memory bank accessed for writing may be changed sequentially to the next memory bank each time writing data for a specific number of lines in the captured image is completed.
Furthermore, the memory control unit 57 in the foregoing embodiment changes the memory bank accessed for writing when writing a specific amount of data is completed, but the memory control unit 57 may instead change the memory bank addressed for writing when writing a desired amount of data specified by the CPU 53 is completed. However, if the write memory bank is changed when writing a specific amount of data is completed as in the foregoing embodiment, image data can be stored to each memory bank according to a known rule without requiring complicated control.

### B7: Variation 7

In the foregoing embodiment the memory control unit 57 changes the memory bank to which image data is written according to a predetermined sequence, but a configuration in which the memory control unit 57 freely selects the memory bank for writing the image data is also conceivable. Because the memory bank to which image data is written also changes in such a configuration, image data will not be written to and read from the same memory bank for an extended time. However, if the memory control unit 57 changes the memory bank accessed for writing image data according to a predetermined order as described in the foregoing embodiment, image data can be stored to each memory bank in an orderly sequence. In addition, the memory bank accessed for reading and the memory bank accessed for writing can be different memory banks as a result of the memory control unit 57 selecting the memory bank for reading the image data according to a predetermined sequence.

### B8: Variation 8

The memory 500 in the foregoing embodiment has eight memory banks, but the number of memory banks is not limited to 8. More specifically, the number of memory banks can be any number that enables changing the memory bank accessed for writing. For example, if the image reading device captures only the front image data **Dl** and does not apply a correction process using correction data, the memory 500 may be rendered with two or more memory banks.

### B9: Variation 9

Some of the functions rendered by software in the foregoing embodiment may be rendered by hardware, and some of the functions rendered by hardware in the foregoing may be rendered by softwa re.
Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom. Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. An image reading device comprising:
an image reading sensor (33; 34) for capturing an image of a subject;
memory (500) that has a storage area divided into a plurality of memory banks (510, 520, 530, 540, 550, 560, 570, 580), each of the plural memory banks (510, 520, 530, 540, 550, 560, 570, 580) having an image data storage area (511) for storing image data (D1; D2) of the captured image; and
a memory control unit (57) for writing the image data (D1; D2) to the image data storage areas (511) of the plurality of memory banks (510, 520, 530, 540, 550, 560, 570, 580), wherein the memory control unit (57) is configured to change the memory bank that is accessed for writing the image data (D1; D2) during writing the image data (D1; D2);
wherein the image data (D1; D2) is sequentially stored in the memory banks (510, 520, 530, 540, 550, 560, 570, 580) by being segmented into data units, each data unit of the image data (D1; D2) having a smaller data size than the data capacity of the image data storage area (511) of one of the memory banks (510, 520, 530, 540, 550, 560, 570, 580) and each data unit being stored in one of the memory banks (510, 520, 530, 540, 550, 560, 570, 580).

2. The image reading device described in claim 1, wherein:
the memory control unit (57) is adapted to read the image data (D1; D2) from a memory bank that is different from the memory bank to which the image data (D1; D2) is being written, in particular by reading a first data unit of the image data (D1; D2) from a first memory bank while writing a second data unit of the image data (D1; D2) from a second memory bank.

3. The image reading device described in claim 1 or 2, wherein:
the memory control unit (57) is adapted to change the memory bank that is accessed for writing when writing a specific amount of data that is less than the data capacity of the image data storage area (511) of one of the memory banks (510, 520, 530, 540, 550, 560, 570, 580) is completed.

4. The image reading device described in claim 3, wherein the specific amount of data corresponds to the data size of the data units.

5. The image reading device described in at least one of claims 1 to 4, wherein:
the memory control unit (57) is adapted to change the memory bank that is accessed for writing according to a predetermined order among the plurality of memory banks (510, 520, 530, 540, 550, 560, 570, 580).

6. A method of writing image data in an image reading device,
the image reading device (11) having memory (500) with a storage area divided into a plurality of memory banks (510, 520, 530, 540, 550, 560, 570, 580), and each of the plural memory banks having an image data storage area (511) for storing the image data (D1; D2),
the image data writing method comprising steps of:
(a) capturing an image of a subject; and
(b) writing image data (D1; D2) to the memory (500),
wherein the memory bank that is accessed for writing the image data (D1; D2) during the step (b) of writing the image data (D1; D2) is changed, the image data (D1; D2) being sequentially stored in the memory banks (510, 520, 530, 540, 550, 560, 570, 580) by being segmented into data units, each data unit of the image data (D1; D2) having a smaller data size than the data capacity of the image data storage area (511) of one of the memory banks (510, 520, 530, 540, 550, 560, 570, 580) and each data unit being stored in one of the memory banks (510, 520, 530, 540, 550, 560, 570, 580).
